# EUROPEAN PATENT SPECIFICATION

(11) **EP 2 229 274 B1**
(45) Date of publication and mention of the grant of the patent: **24.04.2013**
(21) Application number: 07849404.4
(22) Date of filing: 10.12.2007
(51) Int. Cl.: B29D 30/38, B29D 30/46

(54) **PROCESS AND APPARATUS FOR MANUFACTURING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL DE FABRICATION DE PNEUS POUR ROUES DE VÉHICULES

(43) Date of publication of application: 22.09.2010
(73) Proprietor: Pirelli Tyre S.P.A., 20126 Milan (IT)
(72) Inventor: AMURRI, Cesare Emanuele, I-20156 Milano (IT); MARCHINI, Maurizio, I-20126 Milan (IT)
(74) Representative: Tansini, Elio Fabrizio
(86) International application number: PCT/IB2007/055002
(87) International publication number: WO 2009/087428

(56) References cited:
- EP-A- 0 927 629
- EP-A- 1 226 926
- EP-A- 1 712 346
- US-A- 4 126 720
- US-B2- 6 969 440

## Description

The present invention relates to a process and an apparatus for manufacturing tyres for vehicle wheels. In particular, the present invention is concerned with a process and an apparatus for producing a semifinished product for manufacturing a carcass structure of tyres for vehicle wheels.

Manufacture of a tyre for vehicle wheels generally involves preparation of a carcass structure comprising one or more carcass plies each of which is formed by circumferentially winding up, on a building drum, at least one semifinished product comprising textile or metallic reinforcing cords that are transversely oriented relative to the longitudinal extension of the article of manufacture itself. More specifically, within the present specification and the following claims, identified as "design angle" relating to a carcass ply is the acute angle confined between the reinforcing cords of the carcass ply itself and a direction parallel to the longitudinal extension of said carcass ply. According to this definition, the so-called radial tyres therefore have a design angle of about 90°.

When winding has been completed, the respectively opposite end flaps of the carcass ply are turned up loop-wise around annular anchoring structures, each of them being normally made up of a substantially circumferential annular insert onto which at least one filling insert is applied, at a radially external position.

Then a belt structure is associated with the carcass structure, said belt structure comprising one or more belt layers located in radially superposed relationship with respect to each other and to the carcass ply, having textile or metallic reinforcing cords with a crossed orientation and/or substantially parallel to the circumferential extension direction of the tyre. A tread band also made of elastomeric material like other semifinished products constituting the tyre is applied to the belt structure, at a radially external position.

It is to be pointed out that, to the aims of the present specification, by the term "elastomeric material" it is intended a compound comprising at least one elastomeric polymer and at least one reinforcing filler. Preferably, this compound further comprises additives such as cross-linking agents and/or plasticizers, for example. Due to the presence of the cross-linking agents, this material can be cross-linked by heating, so as to form the final article of manufacture.

In addition, respective sidewalls of elastomeric material are applied, either before or after application of the tread band, to the side surfaces of the carcass structure, each extending from one of the side edges of the tread band until close to the respective annular anchoring structure to the beads.

The semifinished product used for making the carcass .ply is normally obtained by cutting to size a segment of a continuous article of manufacture obtained in a preceding working step. More particularly, manufacture of this article involves a preliminary working operation during which by calendering for example, a plurality of cords disposed parallel to each other are coated with a layer of raw elastomeric material so as to obtain a continuous article of manufacture in which said cords are oriented in a longitudinal direction. Subsequently, the article of manufacture is transversely cut so as to obtain segments of a length corresponding to the transverse size of the article of manufacture to be obtained.

These segments are sequentially spliced end to end or joined together with slight overlapping, to form the continuous article of manufacture having its cords oriented in a transverse direction to its longitudinal extension.

US 6,969,440 discloses preparation of an article of manufacture to be used for making a carcass ply, starting from a continuously extruded tape-like element comprising cords disposed longitudinally in side by side relationship and incorporated into a layer of elastomeric material. The extruded tape-like element is spirally wound around a cylindrical drum, so that the side edges of each coil are tightly in contact with each other, in order to form a cylindrical sleeve. The cylindrical sleeve is subsequently cut in a direction orthogonal to the winding angle of the coils. Afterwards, the cylindrical sleeve is laid in a plane so as to obtain an article of manufacture in the form of a rectangular sheet consisting of a plurality of tape segments disposed close to each other in parallel. The article of manufacture in the form of a .sheet is subsequently wound on a cylindrical drum, so that the tape segments extend parallel to the geometric axis of the drum itself, in order to form a carcass ply in the form of a sleeve having cords oriented parallel to its geometric axis, to be used in manufacturing a tyre.

In document EP 1226926 it is described an apparatus and a method of producing a ply layer for tyres. The peripheral length of the outer surface of a drum is set to be the same as the width size of the ply used for making the tyres, or of a multiple thereof. The length in the extension direction of the drum is set to be the same as the length size of the ply used for making the tyres. A tape of a predetermined width in the form of a cord provided with an elastomeric layer is spirally wound on the respective drum, the coil edges being disposed close to each other to form a cylindrical tubular sleeve. The tubular sleeve is cut along a curve that is substantially orthogonal to the extension direction of the tape length and passes through a starting end and a final end of said tape.

Document EP1712346 relates to an apparatus and method for manufacturing a rubber sheet reinforced with a cord which comprises: wrapping around a rubber coated cord group continuously on a surface of a pair of cylindrical bodies rotating in the same direction or on a surface of small diameter roller groups of plural number disposed on a side surface of a cylinder. Document EP0927629 discloses a method and a device for producing a reinforced component of a road vehicle tire by winding at least one cord about a core in a first spiral to form a tubular body having a second longitudinal axis, the first spiral having first turns forming a second angle with the second axis. The tubular body is cut along a second spiral having second turns forming with the first turns a third angle equal to the first angle.

The Applicant has noticed that the above described methods are substantially useful for building radial tyres only, because they do not allow single carcass plies to be obtained in which the cords being part thereof have ply angles different from 90°, relative to a longitudinal extension direction of the ply or to a circumferential direction of the tyre to be made. This requirement is above all felt in the field of tyres used for high and ultra-high performance or racing cars where manufacture of carcass structures suitable for any specific requirement, such as different race courses and conditions, is made necessary.

The Applicant has further noticed that a mere arrangement of the coils designed to form the tubular sleeve, close to each other does not allow a homogeneous and strong ply structure to be obtained.

The Applicant has then felt the necessity to increase flexibility of the apparatus and processes'adapted to make individual carcass plies, so as to also produce a small number of carcass plies or even a unitary batch with particular specifications (length, width, ply angle, etc.) that can change at each production cycle in addition improving the quality of the plies themselves, where possible.

The Applicant has however perceived that the above requirements must not leave out of consideration the productivity of the apparatus and processes for producing tyres as a whole.

In accordance with the present invention, the Applicant has found that by carrying out a production process in which the individual carcass ply is manufactured, after setting its design parameters and calculating the corresponding laying parameters, by winding a continuous strip element on a forming support so as to obtain a tubular semifinished product that, once cut along a line traced out on the longitudinal extension of the forming support, forms said carcass ply, it is possible to achieve unexpected advantages in terms of quality, productivity and operating flexibility in manufacturing tyres having geometric and construction features different from each other, also in batches of small amounts.

In particular, according to a first aspect the present invention relates to a process as defined in claim 1, for manufacturing tyres for vehicle wheels, each tyre comprising a carcass structure having at least one carcass ply, in which preparation of said at least one carcass ply comprises the steps of:
- preparing a continuous strip element including at least one reinforcing cord incorporated into an elastomeric material, said continuous strip element having a width;
- providing a forming support that can be radially configured and having a radially external laying surface and a longitudinal axis;
- setting a length, a width and a design angle of said at least one carcass ply;
- setting a width of an overlapped part of a coil, on a coil of said continuous strip element when the latter is laid on said radially external laying surface;
- calculating a whole number of laid coils of the continuous strip element on the radially external laying surface, a circumferential extension of the radially external surface, a true advancing pitch of the coils;
- radially configuring the forming support for obtaining the calculated circumferential extension;
- spirally winding the continuous strip element around the forming support by partly superposing one coil on the preceding one to make a semifinished product formed with the continuous strip element wound around the geometric axis of said forming support ; - cutting the semifinished product (11) along a line traced out on the longitudinal extension of the forming support (16). The process according to the invention enables individual carcass plies having the set design values to be manufactured in a quick and accurate manner and without generating waste material.

In fact, the circumferential extension of the forming support, the number of coils and the pitch of same (process parameters) are calculated in such a manner as to obtain all the set design values (length, width and design angle of the carcass ply) without being obliged to trim the ply afterwards and eliminate the excess material.

In accordance with a second aspect, the invention relates to an apparatus as defined in claim 18, for manufacturing tyres for vehicle wheels, each tyre comprising a carcass structure having at least one carcass ply, said apparatus comprising a device for preparing said at least one carcass ply having a length, a width and a design angle, said device comprising:
- at least one device for preparing a continuous strip element including at least one reinforcing cord incorporated into an elastomeric material, said continuous strip element having a width;
- a forming support that can be radially configured and having a longitudinal axis and a radially external laying surface exhibiting an adjustable circumferential extension;
- a configuration device to radially configure the forming support;
- a laying unit to lay the continuous strip element on the radially external laying surface of the forming support according to a whole number of coils and a true advancing pitch of the coils, so as to form a semifinished product;
- devices for calculating the whole number of coils, the circumferential extension of the radially external surface and the true advancing pitch of the coils;
- a command unit operatively associated with calculation devices, to govern operation of said device for preparing said at least one carcass ply; a cutting unit for cutting the semifinished product along a cutting line extending in the longitudinal extension of the forming support.

It is sufficient to enter the set design values (input data) into the calculation devices in order to enable the apparatus to make the carcass ply to size. The work cycle can therefore be set easily and quickly.

The simple modification of the input data allows different carcass plies to be made at each cycle, thus giving the apparatus a great flexibility.

Preferred embodiments of the invention are defined in the dependent claims.

The present invention in at least one of said aspect can have at least one of the following preferred features.

Preferably, the cutting step is provided in which the semifinished product is cut along a cutting line passing through a starting end of the continuous strip element and a final end of said continuous strip element.

More preferably, subsequent to said cutting step, a step of unrolling the semifinished product from the forming support is provided.

Preferably, the coil number is calculated as a function of the length of said at least one carcass ply, the width of the continuous strip element, the design angle and the width of the overlapped part.

In addition, the true pitch is calculated as a function of the length of said at least one carcass ply, the width of the continuous strip element, the design angle and the width of the overlapped part.

Furthermore, the circumferential extension is calculated as a function of the width of said at least one carcass ply, the length of said at least one carcass ply, the width of the continuous strip element, the design angle and the width of the overlapped part.

Moreover, each tangent to the cutting line delimits, relative to a direction parallel to the longitudinal axis of the forming support, a cutting angle dependent on the width of said at least one carcass ply, the length of said at least one carcass ply, the width of the continuous strip element, the design angle and the width of the overlapped part.

Unless numerical approximations are done, all process parameters are calculating taking into account all set design values, in order to obtain a ply exactly having said values.

In accordance with a preferred embodiment relating to the calculations to be carried out, the whole number of coils is calculated by:
- dividing the projection of said length of said carcass ply along a direction perpendicular to the coils by the difference between the width of the continuous strip element and the width of the overlapped part, the result being approximated to the closest whole number.

Preferably the true pitch is calculated by:
- dividing the projection of said length of said carcass ply along a direction perpendicular to the coils by the whole number of coils.

In addition; preferably, the circumferential extension of the forming support is calculated by:
- calculating an inclination angle of the coils relative to a plane orthogonal to the longitudinal axis of the forming support;
- calculating a length of a coil starting and.ending on a line parallel to the longitudinal axis;
- calculating said circumferential extension of the forming support as the product of the length by the cosine of the inclination angle.

Preferably, a cutting angle is calculated, which is confined between a tangent to a cutting line at a predetermined point and a direction parallel to the longitudinal axis and passing through said predetermined point, as the algebraic sum of the inclination angle of the coils and the angle complementary to the design angle.

According to a preferred embodiment, the step of winding the continuous strip element comprises the steps of setting the forming support in rotation around the longitudinal axis and moving forward a laying head of the continuous strip element along a direction parallel to said longitudinal axis and of a length equal to the projection of the true pitch onto said longitudinal axis during each revolution of the forming support.

In addition, during the winding step of the continuous strip element, a last rotation of the forming support measured relative to the starting end of the continuous strip element is different from 360° by a phase angle depending on the width of said at least one carcass ply, the length of said at least one carcass ply, the width of the continuous strip element, the design angle and the width of the overlapped part.

Preferably, in addition, the step of cutting the coils comprises the steps of rotating the forming support around the longitudinal axis and moving forward a cutting head along a direction parallel to said longitudinal axis.

These movements are of relatively simple accomplishment through devices that are not very complicated and at the same time ensure optimal accuracy, high execution speed and high reliability.

Preferably, the width of the overlapped part is greater than about 0.3 mm.

In addition, preferably the width of the overlapped part is smaller than about 3 mm.

More preferably, the width of the overlapped part is greater than about 0.5 mm.

In addition, preferably the width of the overlapped part is smaller than about 2 mm.

Overlapping between the coils ehsures continuity of the semifinished product designed to form the carcass ply, even when it is submitted to radial deformation to give it the toroidal shape of the tyre.

Preferably, the width of the continuous strip element is greater than about 5 mm.

In addition, preferably, the width of the continuous strip element is smaller than about 60 mm.

More preferably, the width of the continuous strip element is greater than about 10 mm.

In addition, preferably, the width of the continuous strip element is smaller than about 50 mm.

The execution speed allows continuous strip elements of limited width to be used without impairing the duration of each work cycle.

Preferably, the design angle is greater than 50°.

In addition, preferably, the design angle is smaller than about 90°.

More preferably, the design angle is greater than about 60°.

In addition, preferably, the design angle is smaller than about 85°.

More preferably, the design angle is greater than about 65°.

In addition, preferably, the design angle is smaller than about 75°.

According to a preferred embodiment, corresponding to said length of said at least one carcass ply, is a submultiple integer of said length.

Most preferably, corresponding to said width of said at least one carcass ply, is a multiple integer of said width.

Preferably, said submultiple integer and multiple integer have the same value.

In addition, when said semifinished product has the same length as said submultiple integer, the process comprises the step of longitudinally joining a plurality of semifinished products together in order to obtain the carcass ply having said length.

In addition, when said semifinished product has the same length as said submultiple integer and a width equal to said multiple integer, the process further comprises the steps of dividing the semifinished product into partial semifinished products having the same width as the width of the carcass ply and longitudinally joining the partial semifinished products together in order to obtain the carcass ply having said length.

According to these variants, it is possible to use shorter and less bulky cylindrical supports, adapted to be handled through a robotized arm.

Preferably, devices for unrolling the semifinished product from the forming support are provided.

More preferably, said command unit controls the device for radially configuring the forming device, the laying unit and the cutting unit, based on data received from said calculation devices.

Preferably, the calculation device working for calculating the number of coils has, as the input data, the length of said at least one carcass ply, the width of the continuous strip element; the design angle of said at least one carcass ply and a width of an overlapped part of a coil on an adjacent coil.

In addition, the calculation device working for calculating the true pitch has, as the input data, the length of said at least one carcass ply, the width of the continuous strip element, the design angle of said at least one carcass ply and a width of an overlapped part of a coil on an adjacent coil.

Furthermore, the calculation device working for calculating the circumferential extension has, as the input data, the width of said at least one carcass ply, the length of said at least one carcass ply, the width of the continuous strip element, the design angle of said at least one carcass ply and a width of an overlapped portion of a coil on an adjacent coil.

Preferably, the laying unit comprises devices for setting the forming support in rotation around the longitudinal axis, a laying head, and devices for moving the laying head along a direction parallel to said longitudinal axis.

In addition, preferably, the cutting unit comprises devices for setting the forming support in rotation around the longitudinal axis, a cutting head and devices for moving the cutting head along a direction parallel to said longitudinal axis.

The structural simplicity of the devices ensures optimal accuracy in working, high execution speed and high reliability.

In accordance with a preferred embodiment, the apparatus comprises a laying station including the laying unit, a cutting station including the cutting unit, and devices for transfer of the forming supports between the laying station and cutting station.

This solution allows the required work-cycle time for obtaining the ply to be further reduced. In fact, while in the laying station a semifinished product is being prepared on a first forming support, in the cutting station a semifinished product previously manufactured on a second forming support is cut and opened.

Preferably, the devices for unrolling the semifinished product from the forming support comprise a conveyor belt and devices for determining rolling of the forming support on said conveyor belt.

Thus a continuous working is carried out because, as soon as cutting and unrolling of the semifinished product has been completed, said semifinished product is laid on the conveyor belt and immediately brought to a subsequent working station.

Preferably, the cutting unit comprises shears.

Alternatively, the cutting unit comprises a rotating blade.

Alternatively, the cutting unit comprises a fixed blade.

Preferably, in order to vary the circumferential extension of the outer surface of the forming support, the forming support comprises consecutive circumferential sectors that are radially movable by means of the configuration devices.

Preferably, the device for preparing' the continuous strip element comprises a delivery member.

According to a preferred embodiment, the delivery member is an extruder.

In addition, preferably, said forming support is of cylindrical shape.

Further features and advantages will become more apparent from the detailed description of a preferred but not exclusive embodiment of a process and an apparatus for manufacturing tyres, in accordance with the present invention. This description will be set out hereinafter with reference to the accompanying drawings, given by way of non-limiting example, in which:
- Fig. 1 diagrammatically shows a device suitable for preparing a carcass ply belonging to an apparatus for manufacturing tyres made in accordance with the present invention;
- Fig. 2 is a perspective view of a sectioned portion of a strip element suitable for manufacturing the carcass ply in accordance with the process of the invention;
- Fig. 3 shows the strip element of Fig. 2 wound up on a forming support belonging to the device seen in Fig. 1, so as to form a semifinished product;
- Fig. 3a shows enlarged end portions of the forming support in Fig. 3;
- Fig. 4 is a plan view of a semifinished product unrolled from the forming support in Fig. 3, in accordance with the process of the invention
- Fig. 5 shows the semifinished product seen in Fig. 4 wound on a building drum;
- Fig. 6 shows the strip element in Fig. 2 wound on a forming support used in a variant of the process of the invention;
- Fig. 7 is a plan view of the semifinished product unrolled from the forming support of Fig. 6;
- Fig. 8 shows the semifinished product seen in Fig. 7 following a further working step in accordance with a variant of the process of the invention;.
- Fig. 9 is a fragmentary diametrical section view of a tyre obtainable by the process and the apparatus in question.

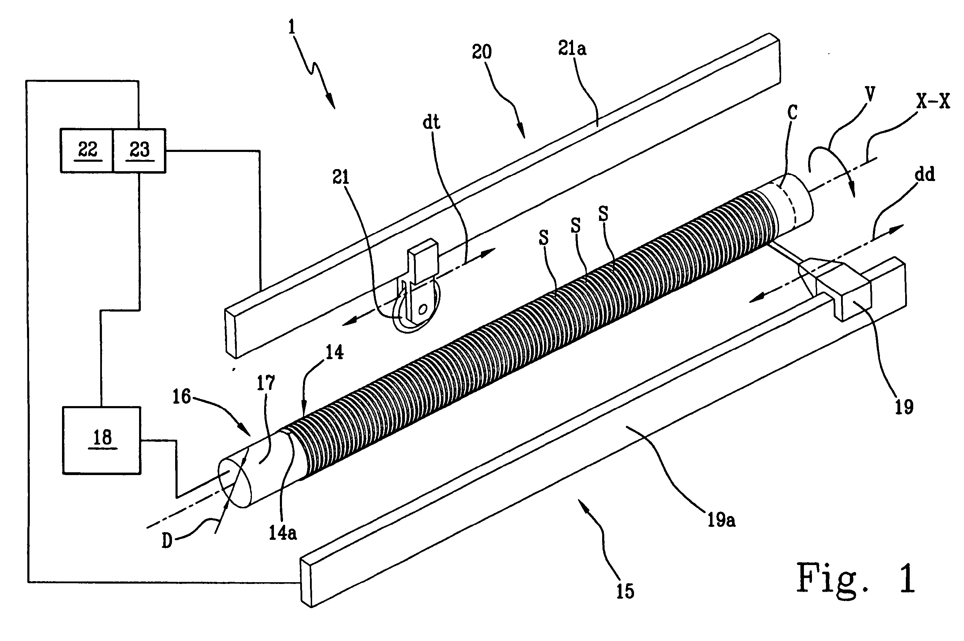

With reference to the drawings, generally identified with reference numeral 1 is a device (Fig. 1) for preparing a carcass ply 3 belonging to devices for building a carcass structure 2a which in turn are part of an apparatus for manufacturing tyres 2 for vehicle wheels in accordance with the present invention.

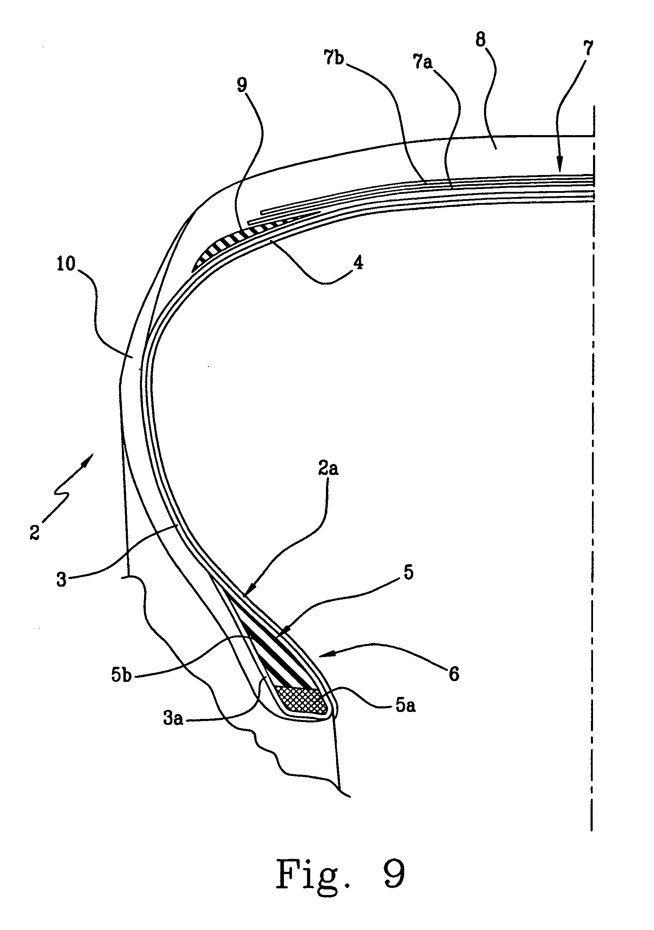

The apparatus is designed to manufacture tyres 2 (Fig. 9) essentially comprising a carcass structure 2a having at least one carcass ply 3. A layer of airtight elastomeric material, or a so-called liner 4, can be internally applied to the carcass ply/plies 3. Two annular anchoring structures 5, each comprising a so-called bead core 5a carrying an elastomeric filler 5b at a radially external position, are in engagement with respective end flaps 3a of the carcass ply/plies 3. The annular anchoring structures 5 are integrated in the vicinity of regions usually identified with the name of "beads" 6, at which usually engagement between tyre 2 and a respective mounting rim takes place.

A belt structure 7 comprising one or more belt'layers 7a, 7b is circumferentially applied around the carcass ply/plies 3 and a tread band 8 circumferentially overlaps the belt structure 7.

So-called "under-belt inserts" 9 can be associated with the belt structure 7 and they are each located between the carcass ply/plies 3 and one of the axially opposite end edges of the belt structure 7. In addition or as an alternative to the under-belt inserts 9, annular inserts (not shown) of elastomeric material and/or comprising textile or metallic cords substantially parallel to the circumferential extension direction of the tyre (zero-degree belt layer), or other reinforcing elements can be radially superposed at least on the axially opposite end edges of the belt layers 7a, 7b, and/or interposed between the belt layers 7a, 7b themselves, at least at said end edges.

Two sidewalls 10, each extending from the respective bead 6 to a corresponding side edge of the tread band 8, are applied to the carcass ply/plies 3, at laterally opposite positions.

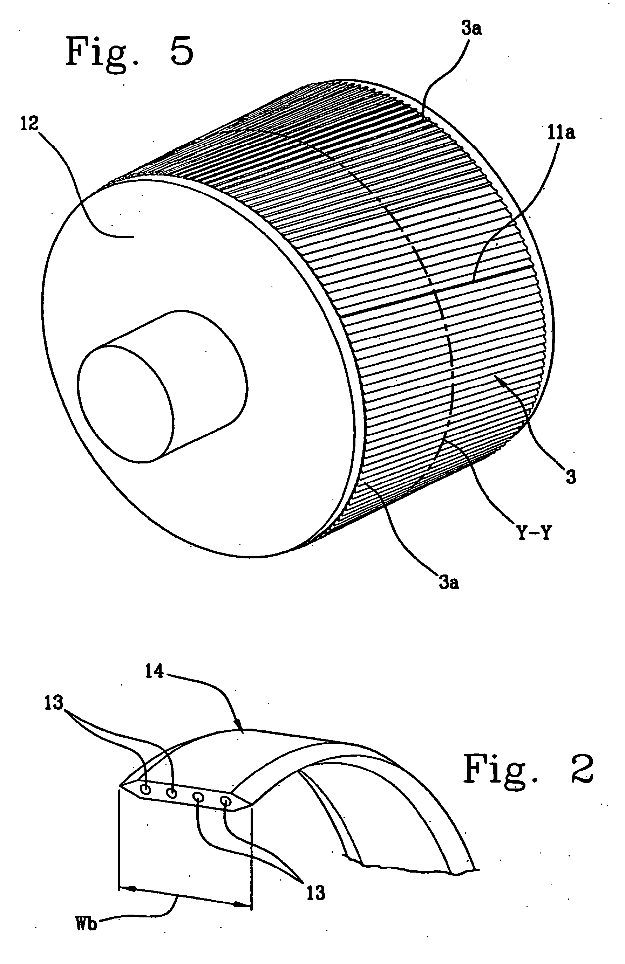

The devices for building the carcass structure 2a comprise said device 1 for preparing the carcass ply 3 as a semifinished sheet product 11, and a building drum 12. Further devices are adapted to wind up the semifinished product in the form of a sheet 11' on the building drum 12 and mutually join the longitudinal opposite ends 11a of the semifinished product, so as to form a tubular sleeve having said end flaps 3a at axially opposite positions (Fig. 5).

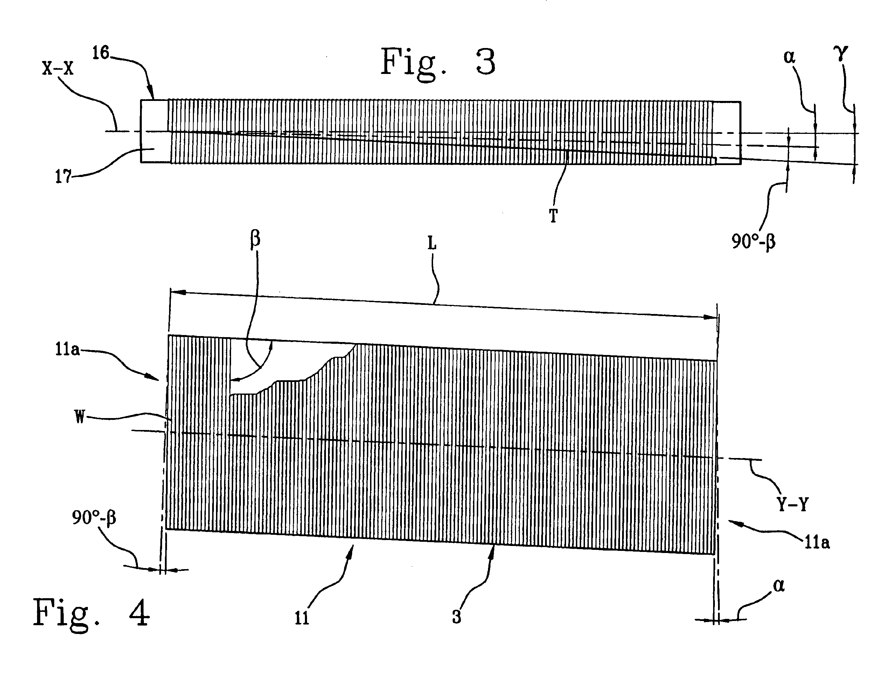

In more detail; as shown in Fig. 4, the semifinished product 11 is a strip of material having a substantially rectangular or rhomboidal shape in plan view, with a major dimension defining the length "L" of ply 3 and a width "W" measured in an orthogonal direction to length "L". Length "L", once tyre 2 has been formed, extends along a circumferential direction "Y-Y" of the latter. Circular opposite edges of the tubular sleeve define said end flaps 3a.

The semifinished product 11 is formed with a plurality of reinforcing cords 13 that are mutually parallel and incorporated into a matrix of elastomeric material. Cords 13 with a direction "Y-Y" parallel to the longitudinal extension of ply 3, i.e. with a direction parallel to length "L" and orthogonal to width "W" of ply 3, delimit a design angle "β, known as "ply .angle". When tyre 2 has been completed, direction "Y-Y" defines a circumferential direction of tyre 2. The design angle "β" is therefore the acute angle delimited by cords 13 with the circumferential direction "Y-Y" of tyre 2. Preferably, said design angle "β" is included between about 50° and about 90°, more preferably between about 60° and about 85°, most preferably between about 65° and about 75°.

Devices, not shown, coaxially engage one of the annular anchoring structures 5 around each of the end flaps 3a, carry out positioning of an outer sleeve comprising the belt structure 7 and tread band 8 at a coaxially centred location around the cylindrical carcass sleeve, and shape the carcass sleeve into a toroidal configuration through radial expansion of the carcass ply, so as to determine application of same against a radially internal surface of the outer sleeve.

Tyre 2 thus build lends itself to be submitted to a vulcanisation treatment and/or other working operations provided in the work cycle.

According to the present invention, during building of tyre 2 said at least one carcass ply 3 is provided to be made starting from at least one continuous strip element 14 preferably comprising one or more reinforcing cords 13 disposed longitudinally close to each other and incorporated into a raw elastomeric material, according to what shown in Fig. 2.

The continuous strip element 14 seen in cross section has a flattened extension with tapering ends. The section of the continuous strip element 14 has a major dimension defining a width "w_{b}" of the continuous strip element 14 preferably included between 5 mm and 60 mm, more preferably between 10 mm and 50 mm.

The continuous strip element 14 can be prepared with a device comprising at least one delivery member, such as an extruder or extrusion die, not shown, longitudinally passed through by the reinforcing cords 13 and designed to extrude the elastomeric coating so as to directly apply it onto the cords 13, while the latter are longitudinally dragged along by traction rollers or equivalent driving devices.

Alternatively, the continuous strip element 14 can be produced separately, in a previous working step, in which case the preparation devices can comprise a feeding reel for example, from which the strip element 14 itself is unwound during execution of the working process.

The continuous strip element 14 coming from the extruder, the reel or other preparation devices, is submitted to the action of a laying unit 15 causing spiral winding of same around a longitudinal axis "X-X" of a forming support 16, preferably of cylindrical shape and preferably with a circular base, to form with the strip element 14 itself a plurality of coils "S" partly overlapping each other (Fig. 1).

The forming support 16 can be radially configured, i.e. it has a radially external laying surface 17 with an adjustable circumferential extension "C".

In the embodiment shown that, for the sake of simplicity, represents a cylinder provided with a continuous surface, the circumferential extension "C" is a circumference and adjustment of the circumferential extension "C" is obtained by varying the diameter "D" of the forming support 16 by.means of a configuration device 18 only diagrammatically shown.

In a preferred embodiment not shown, the laying surface 17 is formed with a plurality of circumferential sectors consecutively disposed around the longitudinal axis "X-X". The configuration device 18 is adapted to simultaneously translate the circumferential sectors in a direction radial to the longitudinal axis "X-X", so as to determine a variation in the diametrical sizes of the forming support 16. Therefore, the circumferential extension "C" of the forming support 16 is not circular but it consists of a series of consecutively disposed segments so as to define a polygon.

At all events, in the continuation of the present specification and in the appended claims, by "circumferential extension C" it is intended the measure of the outer perimeter of the figure obtained by sectioning the forming support 16 along a plane orthogonal to the longitudinal axis "X-X".

In the non-limiting embodiment shown, the laying unit 15 comprises devices for setting the forming support 16 in rotation around the longitudinal axis "X-X", such as a mandrel, a laying head 19 and devices 19a, only diagrammatically shown, to move the laying head 19 along a direction "d_{d}" parallel to said longitudinal axis "X-X".

The laying head 19 is fed with the continuous strip element 14 coming from the extruder, the reel or other preparation devices, and is able to apply it onto the laying surface 17.

In more detail, the forming support 16 is continuously rotated around its longitudinal axis "X-X" in one way "v" and simultaneously the laying head 19 is moved forward parallel to this longitudinal axis "X-X", while carrying out distribution of the strip element 14.

At all events, irrespective of the specific motion of the individual elements, the relative movement between forming support 16 and laying head 19 describes a substantially helicoidal trajectory around the longitudinal axis "X-X".

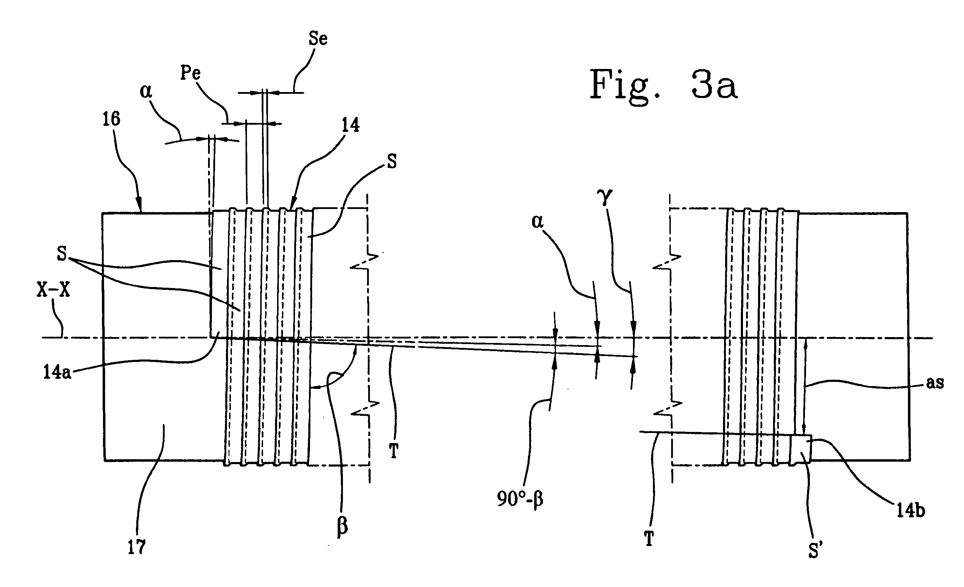

When laying has been completed, the continuous strip element 14 defines said semifinished sheet product 11 rolled up like a tube on the forming support 16 (Fig. 3).

Device 1 for preparing the carcass ply 3 further comprises a cutting unit 20 capable of carrying out a cut on the semifinished product 11 still rolled up, along a line "T" extending along the longitudinal extension of the forming support 16, passing through a starting end and a final end of the continuous strip element 14 and parallel to said direction defining the length "L" of the carcass ply to be obtained (Fig. 3).

In the non-limiting embodiment shown, the cutting unit 20 comprises devices for setting the forming support 16 in rotation about the longitudinal axis "X-X", which devices can be the same devices operating during laying of the continuous strip element 14, a cutting head 21 and devices 21a, only diagrammatically shown, to move the cutting head 21 along a direction "dₜ" parallel to said longitudinal axis "X-X". The cutting head 21 comprises shears, a rotating blade or a fixed blade, for example.

In more detail, the forming support 16 is rotated around its longitudinal axis "X-X" describing an arc of a circumference or one or more full revolutions, and simultaneously the cutting head 21 is moved forward in parallel to said longitudinal axis "X-X".

Preferably, the laying and cutting operations are carried out in different stations, a laying station comprising the laying unit 20 and a cutting station comprising the cutting unit 21. Devices operating between the two stations transfer the forming supports 16 between said stations. In more detail, at the end of the operation for laying the continuous strip element 14 on one of the forming supports 16, this forming support 16 is moved from the laying station to the cutting station while a new forming support 16 is loaded in the laying station for receiving the continuous strip element 14 as well.

When cutting has been completed, the semifinished product 11 is opened, released from the forming support 15 and laid down on a surface preferably defined by a conveyor belt carrying out transfer of same to the building drum 12 or to other working operations. Devices not shown are therefore able to unroll the semifinished product 11 from the forming support 16 and they, in addition to the conveyor belt, comprise devices for determining rolling of the forming support 16 on said conveyor belt, for example.

The open semifinished product 11 is shown in Fig. 4, in which it is possible to see that, since cords 13 are parallel to the continuous strip element 14, the design angle "β" is delimited between the direction "Y-Y" parallel to the longitudinal extension of ply 3 and the longitudinal extension of each segment of the continuous strip element 14.

In order to be able to obtain, immediately after cutting and unrolling, a semifinished product 11 exactly having the predetermined parameters, i.e. length "L", width "W" and design angle "β" of ply 3, in the process in accordance with the invention provision is made for calculating a whole number "n" of wound coils "S" of the continuous strip element 14, a circumferential extension "C" of the radially external surface 17, and a true advancing pitch "pₑ" of coils "S" along a direction parallel to the longitudinal axis "X-X", and for laying down the continuous strip element 14 according to the calculated parameters.

To this aim, in addition to setting the length "L", width "W" and design angle "β" of ply 3 a priori, a width of the overlapped part "s" is also set.

The width of the overlapped part "s" is the width of the overlapped region between two adjacent coils "S" of the continuous strip element 14 laid down on the forming support 16, measured in parallel to the longitudinal axis "X-X".

Preferably, the width of the overlapped part "s" is included between about 0.3 mm and about 3 mm, more preferably between about 0.5 mm and about 2 mm.

In addition, spiralling is distinguished by a spiralling angle "α" defined as the angle delimited between a straight line tangent at a point to the longitudinal extension of a coil "S" and a plane orthogonal to the longitudinal axis "X-X". This spiralling angle "α" is also the angle confined between a direction parallel to the longitudinal axis "X-X" and a direction perpendicular to the longitudinal extension of a coil "S", as shown in Fig. 3a.

The width of the overlapped part "s" as above defined is liable to be confused with a width of the overlapped part measured along a direction perpendicular to the continuous strip element 14, because the spiralling angle "α" is a "small" angle so that its measure in radians is liable to be confused with the measure of sinα and tanα.

The whole number "n" of coils "S" and the true advancing pitch "pₑ" are calculated as a function of the length "L" of said at least one carcass ply 13, the width "w_{b}" of the continuous strip element 14, the design angle "β" and the width of the overlapped part "s".

Preferably, the whole number "n" of coils is calculated by dividing the projection of the length "L" of the carcass ply 3 along a direction perpendicular to the coils "S" by the difference between the width "w_{b}" of the continuous strip element 14 and the width of the overlapped part "s" and by approximating the result to the closest whole number.

In particular, if the difference between the calculated number and its whole part is smaller than or equal to 0.5, it is approximated to the lower whole number "n". If the difference between the calculated number and its whole part is greater than or equal to 0.51 it is approximated to the upper whole number "n".

The true pitch "pₑ" is calculated by dividing the projection of length "L" along a direction perpendicular to coils "S" by the previously calculated whole number "n" of coils.

It results therefrom that the continuous strip element 14 is wound up with a true overlapped part "sₑ" shown in Fig. 3a, that is slightly different from the set one "s" and equal to the difference between the width "w_{b}" and the calculated true pitch "pₑ".

Preferably, the difference between the true overlapped part "sₑ" and the set one "s" must be smaller than 0.5 mm in absolute value.

The circumferential extension "C" is calculated as a function of the width "W", the length "L" of the carcass ply 3, the width "w_{b}" of the continuous strip element 14, the design angle "β" and the width of the overlapped part "s".

Preferably, the circumferential extension "C" of the forming support 16 is calculated by drawing said spiralling angle "α", calculating a length "1's" of a coil "S'" starting and ending on a line parallel to the longitudinal axis "X-X" and drawing said circumferential extension "C" as the product of the length "1's" by the cosine of the inclination angle "α".

In particular, for calculating the spiralling angle "α", first the length "lₛ" of a coil "S" starting and ending on the cutting line "T" is calculated.

It is important to notice that if it is considered as the individual coil "S", a segment of the continuous strip element of a length "lₛ" starting and ending on the cutting line "T", all the "n" coils "S" have the same length exactly equal to "lₛ".

The length "lₛ" is equal to the ratio between the width "W" and the sine of the design angle "β". The spiralling angle "α" is given by the arc sine of the ratio between the true pitch "pₑ" and the just calculated length "lₛ". The overall length of the continuous strip element 14 used is therefore the product of length "lₛ" by the whole number "n" of coils "S".

If on the contrary it is considered as the individual coil "S'", a segment of the continuous strip element of a length "l'ₛ" starting and ending on a line parallel to the longitudinal axis "X-X", the last coil "S'" has a length different both from "lₛ" and from "l's". In particular, the last coil "S'" can be longer or shorter than the others of length "l'ₛ" by a phase arc "aₛ" (Figs. 1 and 3a) equal to the product of the whole number "n" of coils by the true pitch "pₑ" multiplied by the sine of the sum of the spiralling angle "α" and the angle complementary to the design angle "β" (90 ° - β).

Being the circumferential extension "C" known, before starting laying of the continuous strip element 14 the forming support 16 is configured in order that it may take said circumferential extension "C"..

Subsequently, while the forming support 16 is rotating, the laying head 19 is moved forward by a length equal to the true pitch "pₑ" during each revolution of the forming support 16 until "n" coils "S" of length "lₛ" are laid down.

If the starting end 14a of the continuous strip element 14 is considered as the reference element for rotation of the forming support 16, the last rotation of this forming support 16 measured with respect to the reference element taken into account is therefore smaller than 360° for a phase angle "ω". This phase angle "ω" depends on the width "W" of the carcass ply 3, the length "L" of the carcass ply 3, the width "w_{b}" of the continuous strip element 14, the design angle "β" and the width of the overlapped part "s". In more detail, the phase angle "ω" is the angle subtended by the previously calculated phase arc "aₛ".

In addition, since the cutting line must pass through a starting end 14a and a final end 14b of the continuous strip element 14, usually it is a curve. Each tangent to the cutting line "T" delimits a cutting angle "γ" relative to a direction parallel to the longitudinal axis "X-X" of the forming support 16, which cutting angle depends on the width "W", the length "L", the width "w_{b}", the design angle "β" and the width of the overlapped portion "s". In more detail, this cutting angle "γ" is equal to the sum of the spiralling angle "α" and the angle complementary to the design angle "β".

When "β" is different from 90°, if a two-ply tyre is to be built, the second ply usually has an angle equal to and opposite to the first ply. In this case angle "γ" for the second ply will be: γ=α-(90-β).

In accordance with an alternative embodiment of the process in accordance with the invention, not shown, the semifinished product 11 made on the forming support 16 has. a length "L₁" equal to a submultiple integer of length "L" of ply 3 to be made, and the width "W" of the ply 3 itself.

Therefore, a plurality of semifinished products 11 are made, for each of which the whole number "n" of coils "S", the circumferential extension "C", the true pitch "pₑ" are calculated based on the submultiple integer of the length "L" of the carcass ply 3.

Then the plurality of semifinished products 11 are longitudinally joined together so as to obtain the carcass ply 3 having length "L" and width "W".

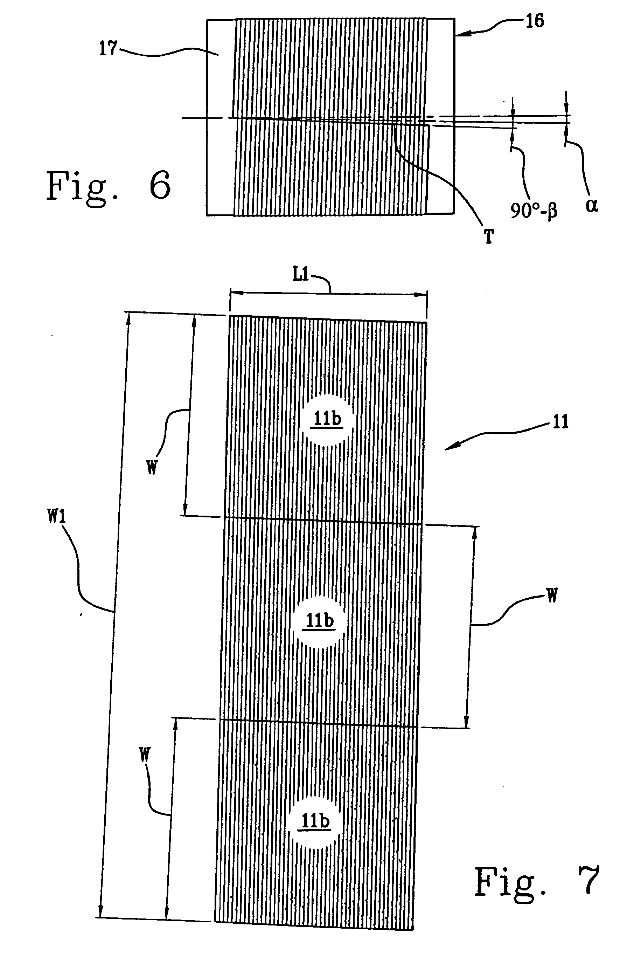

In accordance with a further alternative embodiment of the process of the invention shown in Figs. 6, 7 and 8, the semifinished product 11 made on the forming support 16 has a length "L₁" equal to a submultiple integer of length "L" of the ply 3 to be made and a width "W₁" equal to a corresponding multiple integer of the width "W" of the ply 3 itself. Therefore, if L1=L/3, W1 = 3W, where number "3" represents the "value" of the multiple and submultiple. In this manner it is possible to produce a ply of the same surface as required for building the tyre.

Therefore, a single semifinished product 11 is made for which the whole number "n" of coils "S", the circumferential extension "C" and the true advancing pitch "pₑ" of coils "S" are calculated based on the submultiple integer of the length "L" and also based on the multiple integer of the width "W" of the carcass ply 3.

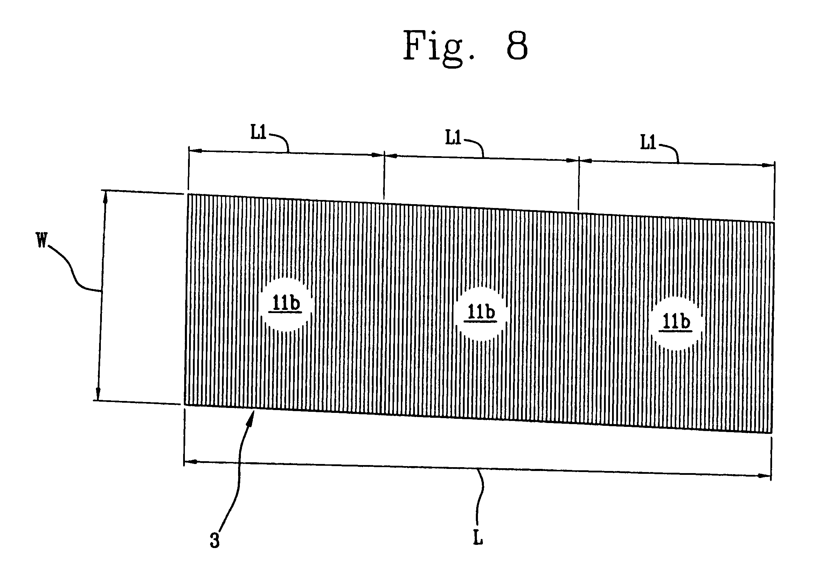

Then the semifinished product 11 is divided into partial semifinished products 11b of the same width as width "W" of the carcass ply 3 and the partial semifinished products 11b are longitudinally joined together so as to obtain the carcass ply 3 having length "L" and width "W" (Fig. 8).

Irrespective of the specific process' adopted, the apparatus according to the invention preferably comprises calculation devices 22, typically a computer, capable of calculating the whole number "n" of coils "S", the circumferential extension "C" of the radially external surface 17, the true advancing pitch "pₑ" of coils "S" and possible other parameters required for operation of the apparatus, starting from input data (width "W", length "L", width "w_{b}", design angle "β", width of the overlapped part "s") entered by an operator.

The calculation devices are operatively connected with a command unit 23 connected to the configuration device 18, the laying unit 15 and cutting unit 20, to control this configuration device 18, laying unit 15 and cutting unit 20 respectively, based on data received from the calculation devices 22.

## Claims

1. A process for manufacturing tyres for vehicle wheels, each tyre (2) comprising a carcass structure (2a) having at least one carcass ply (3),
in which preparation of said at least one carcass ply (3) comprises the steps of:
- preparing a continuous strip element (14) including at least one reinforcing cord (13) incorporated into an elastomeric material, said continuous strip element (14) having a width (w_{b}) ;
- providing a forming support (16) that can be radially configured and having a radially external laying surface (17) and a longitudinal axis (X-X);
- setting a length (L), a width (W) and a design angle (β) of said at least one carcass ply (3);
- setting a width of an overlapped part (s) of a coil (S), on a coil (S) of said continuous strip element (14) when the latter is laid on said radially external laying surface (17);
- calculating a whole number (n) of laid coils (S) of the continuous strip element (14) on the radially external laying surface (17), a circumferential extension (C) of the radially external surface (17), a true advancing pitch (pₑ) of the coils (S);
- radially configuring the forming support (16) for obtaining the calculated circumferential extension (C);
- spirally winding the continuous strip element (14) around the forming support (16) by partly superposing one coil (S) on the preceding one to make a semifinished product (11) formed with the continuous strip element (14) wound around the geometric axis (X-X) of said forming support (16) ;
- cutting the semifinished product (11) along a line traced out on the longitudinal extension of the forming support (16).

2. A process as claimed in claim 1, wherein the coil number (n) is calculated as a function of the length (L) of said at least one carcass ply (3), the width (w_{b}) of the continuous strip element (14), the design angle (β) and the width of the overlapped part (s).

3. A process as claimed in anyone of the preceding claims, wherein the true pitch (pₑ) is calculated as a function of the length (L) of said at least one carcass ply (3), the width (w_{b}) of the continuous strip element (14), the design angle (β) and the width of the overlapped part (s).

4. A process as claimed in anyone of the preceding claims, wherein the circumferential extension (C) is calculated as a function of the width (W) of said at least one carcass ply (3), the length (L) of said at least one carcass ply (3), the width (w_{b}) of the continuous strip element (14), the design angle (β) and the width of the overlapped part (s).

5. A process as claimed in anyone of the preceding claims, wherein the whole number of coils (n) is calculated by:
- dividing the projection of said length (L) of said carcass ply (3) along a direction perpendicular to the coils (S) by the difference between the width (w_{b}) of the continuous strip element (14) and the width of the overlapped part (s), the result being approximated to the closest whole number.

6. A process as claimed in anyone of the preceding claims, wherein the circumferential extension (C) of the forming support (16) is calculated by:
- calculating an inclination angle (α) of the coils (S) relative to a plane orthogonal to the longitudinal axis (X-X) of the forming support (16);
- calculating a length (lₛ) of a coil (S) starting and ending on a line parallel to the longitudinal axis (X-X);
- calculating said circumferential extension (C) of the forming support (16) as the product of the length (lₛ) by the cosine of the inclination angle (α).

7. A process as claimed in anyone of the preceding claims, wherein the step of winding the continuous strip element (14) comprises the steps of setting the forming support (16) in rotation around the longitudinal axis (X-X) and moving forward a laying head (19) of the continuous strip element (14) along a direction parallel to said longitudinal axis (X-X) and of a length equal to the projection of the true pitch (pₑ) onto said longitudinal axis (X-X) during each revolution of the forming support (16).

8. A process as claimed in claim 1, wherein the width of the overlapped part (s) is greater than about 0.3 mm.

9. A process as claimed in claim 1, wherein the width of the overlapped part (s) is smaller than about 3 mm.

10. A process as claimed in claim 1, wherein the width (w_{b}) of the continuous strip element (14) is greater than about 5 mm.

11. A process as claimed in claim 1, wherein the width (w_{b}) of the continuous strip element (14) is smaller than about 60 mm.

12. A process as claimed in claim 1, wherein the design angle (β) is greater than 50°.

13. A process as claimed in claim 1, wherein the design angle (β) is smaller than about 90°.

14. A process as claimed in anyone of the preceding claims, wherein corresponding to said length (L) of said at least one carcass ply (3) is a submultiple integer of said length (L).

15. A process as claimed in anyone of the preceding claims, wherein corresponding to said width (W) of said at least one carcass ply (3) is a multiple integer of said width (W).

16. A process as claimed in claim 14, wherein said semifinished product (11) has the same length (L₁) as said submultiple integer, the process comprising the step of longitudinally joining together a plurality of semifinished products (11) in order to obtain the carcass ply (3) having said length (L).

17. A process as claimed in claim 14 and 15, wherein said submultiple integer and multiple integer have the same value and wherein said semifinished product (11) has the same length (L₁) as said submultiple integer and a width (W₁) equal to said multiple integer, the process further comprising the steps of dividing the semifinished product (11) into partial semifinished products (11b) having the same width as the width (W) of the carcass ply (3) and longitudinally joining together the partial semifinished products (11b) in order to obtain the carcass ply (3) having said length (L).

18. An apparatus for manufacturing tyres for vehicle wheels, each tyre comprising a carcass structure (2a) having at least one carcass ply (3), said apparatus comprising a device (1) for preparing said at least one carcass ply (3) having a length (L), a width (W) and a design angle (β), said device (1) comprising:
- at least one device for preparing a continuous strip element (14) including at least one reinforcing cord (13) incorporated into an elastomeric material, said continuous strip element (14) having a width (w_{b});
- a forming support (16) that can be radially configured and having a longitudinal axis (X-X) and a radially external laying surface (17) exhibiting an adjustable circumferential extension (C);
- a configuration device (18) to radially configure the forming support (16);
- a laying unit (15) to lay the continuous strip element (14) on the radially external laying surface (17) of the forming support (16) by partly superposing one coil (S) on the preceding one according to a whole number (n) of coils (S) and a true advancing pitch (pₑ) of the coils (S), so as to form a semifinished product (11) ;
- devices (22) for calculating the whole number (n) of coils (S), the circumferential extension (C) of the radially external surface (17) and the true advancing pitch (pₑ) of the coils (S);
- a command unit (23) operatively associated with calculation devices (22), to govern operation of said device (1) for preparing said at least one carcass ply (3) ;
a cutting unit (20) for cutting the semifinished product (11) along a cutting line (T) extending in the longitudinal extension of the forming support (16).

19. An apparatus as claimed in claim 18, wherein the calculation device (22) working for calculating the number of coils (n) has, as the input data, the length (L) of said at least one carcass ply (3), the width (w_{b}) of the continuous strip element (14), the design angle (β) of said at least one carcass ply (3) and a width of an overlapped part (s) of a coil (S) on an adjacent coil (S).

20. An apparatus as claimed in claim 18 or 19, wherein the calculation device (22) working for calculating the true pitch (pₑ) has, as the input data, the length (L) of said at least one carcass ply (3), the width (w_{b}) of the continuous strip element (14), the design angle (β) of said at least one carcass ply (3) and a width of an overlapped part (s) of a coil (S) on an adjacent coil (S).

21. An apparatus as claimed in anyone of claims 18 to 20, wherein the calculation device (22) working for calculating the circumferential extension (C) has, as the input data, the width (W) of said at least one carcass ply (3), the length (L) of said at least one carcass ply (3), the width (w_{b}) of the continuous strip element (14), the design angle (β) of said at least one carcass ply (3) and a width of an overlapped portion (s) of a coil (S) on an adjacent coil (S).

22. An apparatus as claimed in anyone of claims 18 to 21, wherein the laying unit (15) comprises devices for setting the forming support (16) in rotation around the longitudinal axis (X-X), a laying head (19) and devices (19a) for moving the laying head (19) along a direction parallel to said longitudinal axis (X-X).

23. An apparatus as claimed in anyone of claims 19 to 21, wherein to said length (L) of said at least one carcass ply (3), a submultiple integer of said length (L) corresponds.

24. An apparatus as claimed in claim 21, wherein to said length (W) of said at least one carcass ply (3), a multiple integer of said width (W) corresponds.

25. An apparatus as claimed in claims 23 and 24, wherein said submultiple and multiple integer have the same value.

## Patentansprüche

1. Verfahren zum Herstellen von Reifen für Fahrzeugräder, bei dem jeder Reifen (2) eine Karkassenstruktur (2a) mit mindestens einer Karkassenschicht (3) aufweist, wobei das Vorbereiten von mindestens einer Karkassenschicht (3) die Schritte umfasst:
- Vorbereiten eines kontinuierlichen Streifenelements (14) mit mindestens einem Verstärkungskabel (13), das in einem elastomeren Material aufgenommen ist, wobei das kontinuierliche Streifenelement (14) eine Breite (w_{b}) aufweist;
- Bereitstellen eines Formträgers (16), der radial konfigurierbar ist und eine radial äußere Ablegefläche (17) und eine Längsachse (X-X) aufweist;
- Festlegen einer Länge (L), einer Breite (W) und eines Gestaltungswinkels (β) der mindestens einen Karkassenschicht (3);
- Festlegen einer Breite eines überlappenden Teils (s) einer Windung (S), auf einer Windung (S) des kontinuierlichen Streifenelements (14), wenn das Letztere auf die radial äußere Ablegefläche (17) gelegt ist;
- Berechnen einer ganzen Zahl (n) an gelegten Windungen (S) des kontinuierlichen Streifenelements (14) auf der radial äußere Ablegefläche (17), einer Umfangserstreckung (C) der radial äußeren Ablegefläche (17), und einem echten fortschreitenden Abstand (pₑ) der Windungen (S);
- radiales Konfigurieren des Formträgers (16) zum Ermitteln der berechneten Umfangserstreckung (C);
- spiralförmiges um den Formträger (16) Wickeln des kontinuierlichen Streifenelements (14) durch partielles Überlagern einer Windung (S) auf die Vorherige, um ein halbfertiges Produkt (11) zu bilden, das mit dem um die geometrische Achse (X-X) des Formträgers (16) gewickelten kontinuierlichen Streifenelement (14) gebildet ist;
- Schneiden des halbfertigen Produkts (11) entlang einer Linie, die an der Längserstreckung des Formträgers (16) vorgezeichnet ist.

2. Verfahren nach Anspruch 1, bei dem die Windungszahl (n) in Funktion der Länge (L) der mindestens einen Karkassenschicht (3), der Breite (w_{b}) des kontinuierlichen Streifenelements (14), des Gestaltungswinkels (β) und der Breite des überlappenden Teils (s) berechnet wird.

3. Verfahren nach Anspruch 1 oder 2, bei dem der echte Abstand (pₑ) in Funktion der Länge (L) der mindestens einen Karkassenschicht (3), der Breite (w_{b}) des kontinuierlichen Streifenelements (14), des Gestaltungswinkels (β) und der Breite des überlappenden Teils (s) berechnet wird.

4. Verfahren nach einem der vorstehenden Ansprüche, bei dem die Umfangserstreckung (C) in Funktion der Breite (W) der mindestens einen Karkassenschicht (3), der Länge (L) der mindestens einen Karkassenschicht (3), der Breite (w_{b}) des kontinuierlichen Streifenelements (14) und der Breite des überlappenden Teils (s) berechnet wird.

5. Verfahren nach einem der vorstehenden Ansprüche, bei dem die ganze Zahl an Windungen (n) berechnet wird durch:
- Teilen der Projektion der Länge (L) der Karkassenschicht (3) entlang einer Richtung senkrecht zu den Windungen (S) durch die Differenz zwischen der Breite (w_{b}) des kontinuierlichen Streifenelements (14) und der Breite des überlappenden Teils (s), wobei das Ergebnis durch die nächstliegende ganze Zahl angenähert wird.

6. Verfahren nach einem der vorstehenden Ansprüche, bei dem die Umfangsrichtung (C) des Formträgers (16) berechnet wird durch:
- Berechnen eines Neigungswinkels (α) der Windungen (S) relativ zu einer Ebene senkrecht zu der Längsachse (X-X) des Formträgers (16);
- Berechnen einer Länge (lₛ) einer Windung (S), die auf einer Linie, parallel zu der Längsachse (X-X), beginnt und endet;
- Berechnen der Umfangserstreckung (C) des Formträgers (16) als das Produkt der Länge (lₛ) mit dem Cosinus des Neigungswinkels (α).

7. Verfahren nach einem der vorstehenden Ansprüche, bei dem der Schritt des Wickelns des kontinuierlichen Streifenelements (14) die Schritte umfasst: um die Längsachse (X-X) in Drehung Versetzen des Formträgers (16) und Vorwärtsbewegen eines Legekopfs (19) des kontinuierlichen Streifenelements (14) entlang einer Richtung parallel zu der Längsachse (X-X) und einer Länge, die während jeder Umdrehung des Formträgers (16) der Projektion des echten Abstands (pₑ) auf die Längsachse (X-X) entspricht.

8. Verfahren nach Anspruch 1, bei dem die Breite des überlappenden Teils (s) größer ist als ungefähr 0.3 mm.

9. Verfahren nach Anspruch 1, bei dem die Breite des überlappenden Teils (s) kleiner ist als ungefähr 3 mm.

10. Verfahren nach Anspruch 1, bei dem die Breite (w_{b}) des kontinuierlichen Streifenelements (14) größer ist als ungefähr 5 mm.

11. Verfahren nach Anspruch 1, bei dem die Breite (w_{b}) des kontinuierlichen Streifenelements (14) kleiner ist als ungefähr 60 mm.

12. Verfahren nach Anspruch 1, bei dem der Gestaltungswinkel (β) größer ist als 50°.

13. Verfahren nach Anspruch 1, bei dem der Gestaltungswinkel (β) kleiner ist als ungefähr 90°.

14. Verfahren nach einem der vorstehenden Ansprüche, bei dem der Länge (L) der mindestens einen Karkassenschicht (3) eine ganze Zahl entspricht, die ein Teiler der Länge (L) ist.

15. Verfahren nach einem der vorstehenden Ansprüche, bei dem der Breite (W) der mindestens einen Karkassenschicht (3) eine ganze Zahl entspricht, die ein Vielfaches der Breite (W) ist.

16. Verfahren nach Anspruch 14, bei dem das halbfertige Produkt (11) dieselbe Länge (L₁) wie die ganze Zahl, die ein Teiler ist, aufweist, wobei das Verfahren den Schritt des in Längsrichtung Verbindens einer Vielzahl von halbfertigen Produkten (11) umfasst, um zu erreichen, dass die Karkassenschicht (3) die Länge (L) aufweist.

17. Verfahren nach Anspruch 14 und 15, bei dem ganze Zahl, die ein Teiler ist, und die ganze Zahl, die ein Vielfaches ist, denselben Wert aufweisen, und wobei das halbfertige Produkt (11) dieselbe Länge (L₁) wie die ganze Zahl, die ein Teiler ist, aufweist, und eine Breite (W₁), die mit der ganzen Zahl, die ein Vielfaches ist, identisch ist, wobei das Verfahren ferner die Schritte umfasst: Unterteilen des halbfertigen Produkts (11) in partielle halbfertige Produkte (11b) mit derselben Breite wie die Breite (W) der Karkassenschicht (3) und in Längsrichtung Verbinden der partiellen halbfertigen Produkte (11b), um zu erreichen, dass die Karkassenschicht (3) die Länge (L) aufweist.

18. Vorrichtung zum Herstellen von Reifen für Fahrzeugräder, wobei jeder Reifen eine Karkassenstruktur (2a) mit mindestens einer Karkassenschicht (3) aufweist, wobei die Vorrichtung eine Einrichtung (1) zum Vorbereiten der mindestens einen Karkassenschicht (3) mit einer Länge (L), einer Breite (W) und einem Gestaltungswinkel (β) aufweist, wobei die Einrichtung (1) aufweist:
- mindestens eine Einrichtung zum Vorbereiten eines kontinuierlichen Streifenelements (14) mit mindestens einem Verstärkungskabel (13), das in einem elastomeren Material aufgenommen ist, wobei das kontinuierliche Streifenelement (14) eine Breite (w_{b}) aufweist;
- einen Formträger (16), der radial konfigurierbar ist und eine Längsachse (X-X) und eine radial äußere Ablegefläche (17) mit einer einstellbare Umfangserstreckung (C), aufweist;
- eine Konfigurationseinrichtung (18) zum radialen Konfigurieren des Formträgers (16);
- eine Legeeinheit (15) zum auf die radial äußere Ablegefläche (17) des Formträgers (16) Legen des kontinuierlichen Streifenelements (14), durch partielles Überlagern einer Windung (S) auf die Vorherige, gemäß einer ganzen Zahl (n) an Windungen (S) und einem echten fortschreitenden Abstand (pₑ) der Windungen (S), um so ein halbfertiges Produkt (11) zu bilden;
- Einrichtungen (22) zum Berechnen der ganzen Zahl (n) an Windungen (S), der Umfangserstreckung (C) der radial äußeren Fläche (17) und des echten fortschreitenden Abstands (pₑ) der Windungen (S);
- eine Befehlseinheit (23), die operativ mit Berechnungseinrichtungen (23) verbunden ist, um den Betrieb des Einrichtung (1) zum Vorbereiten der mindestens einen Karkassenschicht (3) zu bestimmen;
- eine Schneideeinheit (20) zum Schneiden des halbfertigen Produkts (11) entlang einer Schneidelinie (T), die sich in der Längserstreckung des Formträgers (16) erstreckt.

19. Vorrichtung nach Anspruch 18, bei der die Berechnungeinrichtung (22), die zum Berechnen der Zahl an Windungen (n) arbeitet, als Eingabedaten die Länge (L) der mindestens einen Karkassenschicht (3), die Breite (w_{b}) des kontinuierlichen Streifenelements (14), den Gestaltungswinkel (β) der mindestens einen Karkassenschicht (3) und eine Breite eines auf einer benachbarten Windung (S) überlappenden Teils (s) einer Windung (S) aufweist.

20. Vorrichtung nach Anspruch 18 oder 19, bei der die Berechnungseinrichtung (22), die zum Berechnen des echten Abstands (pₑ) arbeitet, als Eingabedaten die Länge (L) der mindestens einen Karkassenschicht (3), die Breite (w_{b}) des kontinuierlichen Streifenelements (14), den Gestaltungswinkel (β) der mindestens einen Karkassenschicht (3) und eine Breite eines auf einer benachbarten Windung (S) überlappenden Teils (s) einer Windung (S) aufweist.

21. Vorrichtung nach Anspruch 18 oder 20, bei der die Berechnungseinrichtung (22), die zum Berechnen der Umfangserstreckung (C) arbeitet, als Eingabedaten die Breite (W) der mindestens einen Karkassenschicht (3), die Länge (L) der mindestens einen Karkassenschicht (3), die Breite (w_{b}) des kontinuierlichen Streifenelements (14), den Gestaltungswinkel (β) der mindestens einen Karkassenschicht (3) und eine Breite eines auf einer benachbarten Windung (S) überlappenden Abschnitts (s) einer Windung (S) aufweist.

22. Verfahren nach einem der Ansprüche 18-21, bei der die Legeeinheit (15) Einrichtungen zum um die Längsachse (X-X) in Drehung Versetzen des Formträgers (16), einen Legekopf (19) und Einrichtungen (19a) zum Bewegen des Legekopfs (19) entlang einer Richtung parallel zu der Längsrichtung (X-X) aufweist.

23. Vorrichtung nach einem der Ansprüche 19-21, bei der die Länge (L) der mindestens einen Karkassenschicht (3) einer ganzen Zahl entspricht, die ein Teiler der Länge (L) ist.

24. Vorrichtung nach Anspruch 21, bei der die Länge (W) der mindestens einen Karkassenschicht (3) einer ganzen Zahl entspricht, die ein Vielfaches der Breite (W) ist.

25. Vorrichtung nach Anspruch 23 und 24, bei der die ganze Zahl, die ein Teiler ist, und die ganze Zahl, die ein Vielfaches ist, denselben Wert aufweisen.

## Revendications

1. Procédé de fabrication de pneus pour roues de véhicules, chaque pneu (2) comprenant une structure de carcasse (2a) ayant au moins une nappe de carcasse (3),
dans lequel une préparation de ladite au moins une nappe de carcasse (3) comprend les étapes de :
- préparer un élément en forme de bande continue (14) incluant au moins une corde de renforcement (13) incorporé dans un matériau élastomère, ledit élément en forme de bande continue (14) ayant une largeur (w_{b}) ;
- fournir un support de formage (16) qui peut être configuré radialement et ayant une surface de pose radialement externe (17) et un axe longitudinal (X-X) ;
- définir une longueur (L), une largeur (W) et un angle de conception (β) de ladite au moins une nappe de carcasse (3) ;
- définir une largeur d'une partie de chevauchement (s) d'une spire (S), sur une spire (S) dudit élément en forme de bande continue (14) lorsque cette dernière est déposée sur ladite surface de pose radialement externe (17) ;
- calculer un nombre entier (n) de spires déposées (S) de l'élément en forme de bande continue (14) sur la surface de pose radialement externe (17), une étendue circonférentielle (C) de la surface radialement externe (17), un pas d'avance vrai (pₑ) des spires (S) ;
- configurer radialement le support de formage (16) pour obtenir l'étendue circonférentielle calculée (C) ;
- enrouler en spirale l'élément en forme de bande continue (14) autour du support de formage (16) par superposition partielle d'une spire (S) sur la précédente pour faire un produit semi-fini (11) formé avec l'élément en forme de bande continue (14) enroulé autour de l'axe géométrique (X-X) dudit support de formage (16) ;
- couper ledit produit semi-fini (11) le long d'une ligne tracée sur l'étendue longitudinale du support de formage (16).

2. Procédé selon la revendication 1, dans lequel le nombre de spires (n) est calculé en fonction de la longueur (L) de ladite au moins une nappe de carcasse (3), de la largeur (w_{b}) de l'élément en forme de bande continue (14), de l'angle de conception (β) et de la largeur de la partie de chevauchement (s).

3. Procédé selon l'une quelconque des revendications précédentes, dans lequel le pas vrai (pₑ) est calculé en fonction de la longueur (L) de ladite au moins une nappe de carcasse (3), de la largeur (w_{b}) de l'élément en forme de bande continue (14), de l'angle de conception (β) et de la largeur de la partie de chevauchement (s).

4. Procédé selon l'une quelconque des revendications précédentes, dans lequel l'étendue circonférentielle (C) est calculée en fonction de la largeur (W) de ladite au moins une nappe de carcasse (3), la longueur (L) de ladite au moins une nappe de carcasse (3), de la largeur (wb) de l'élément en forme de bande continue (14), de l'angle de conception (β) et de la largeur de la partie de chevauchement (s).

5. Procédé selon l'une quelconque des revendications précédentes, dans lequel le nombre entier de spires (n) est calculé par :
- division de la projection de ladite longueur (L) de ladite nappe de carcasse (3) le long d'une direction perpendiculaire aux spires (S), par la différence entre la largeur (w_{b}) de l'élément en forme de bande continue (14) et la largeur de la partie de chevauchement (s), le résultat étant arrondi au nombre entier le plus proche.

6. Procédé selon l'une quelconque des revendications précédentes, dans lequel l'étendue circonférentielle (C) du support de formage (16) est calculée par :
- calcul d'un angle d'inclinaison (α) des spires (S) par rapport à un plan orthogonal à l'axe longitudinal (X-X) du support de formage (16) ;
- calcul d'une longueur (lₛ) d'une spire (S) commençant et finissant sur une ligne parallèle à l'axe longitudinal (X-X) ;
- calcul de ladite étendue circonférentielle (C) du support de formage (16) comme le produit de la longueur (lₛ) par le cosinus de l'angle d'inclinaison (α).

7. Procédé selon l'une quelconque des revendications précédentes, dans lequel l'étape d'enroulement de l'élément en forme de bande continue (14) comprend les étapes de faire tourner le support de formage (16) autour de l'axe longitudinal (X-X) et faire avancer une tête de pose (19) de l'élément en forme de bande continue (14) selon une direction parallèle audit axe longitudinal (X-X) et d'une longueur égale à la projection du pas vrai (pₑ) sur ledit axe longitudinal (X-X) au cours de chaque révolution du support de formage (16).

8. Procédé selon la revendication 1, dans lequel la largeur de la partie de chevauchement (s) est supérieure à environ 0,3 mm.

9. Procédé selon la revendication 1, dans lequel la largeur de la partie de chevauchement (s) est inférieure à environ 3 mm.

10. Procédé selon la revendication 1, dans lequel la largeur (w_{b}) de l'élément en forme de bande continue (14) est supérieure à environ 5 mm.

11. Procédé selon la revendication 1, dans lequel la largeur (w_{b}) de l'élément en forme de bande continue (14) est inférieure à environ 60 mm.

12. Procédé selon la revendication 1, dans lequel l'angle de conception (β) est supérieur à 50°.

13. Procédé selon la revendication 1, dans lequel l'angle de conception (β) est inférieur à environ 90°.

14. Procédé selon l'une quelconque des revendications précédentes, dans lequel un sous-multiple entier de ladite longueur (L) correspond à ladite longueur (L) de ladite au moins une nappe de carcasse (3).

15. Procédé selon l'une quelconque des revendications précédentes, dans lequel un entier multiple de ladite largeur (W) correspond à ladite largeur (W) de ladite au moins une nappe de carcasse (3).

16. Procédé selon la revendication 14, dans lequel ledit produit semi-fini (11) a la même longueur (L₁) que ledit sous-multiple entier, le procédé comprenant l'étape de joindre longitudinalement ensemble plusieurs produits semi-finis (11) de manière à obtenir la nappe de carcasse (3) ayant ladite longueur (L).

17. Procédé selon les revendication 14 et 15, dans lequel lesdits entier sous-multiple et entier multiple ont la même valeur et dans lequel ledit produit semi-fini (11) a la même longueur (L₁) que ledit entier sous-multiple et une largeur (W₁) égale audit entier multiple, le procédé comprenant en outre les étapes de division du produit semi-fini (11) en produit semi-finis partiels (11b) ayant la même largeur que la largeur (W) de la nappe de carcasse (3), et de jonction longitudinale des produits semi-finis partiels (11b) ensemble de manière à obtenir la nappe de carcasse (3) ayant ladite longueur (L).

18. Appareil de fabrication de pneus pour roues de véhicule, chaque pneu comprenant une structure de carcasse (2a) ayant au moins une nappe de carcasse (3), ledit appareil comprenant un dispositif (1) pour préparer ladite au moins une nappe de carcasse (3) ayant une longueur (L), une largeur (W) et un angle de conception (β), ledit dispositif (1) comprenant :
- au moins un dispositif pour préparer un élément en forme de bande continue (14) incluant au moins un cordon de renforcement (13) incorporé dans un matériau élastomère, ledit élément en forme de bande continue (14) ayant une largeur (w_{b}) ;
- un support de formage (16) qui peut être configuré radialement et ayant un axe longitudinal (X-X) et une surface de pose radialement externe (17) présentant une étendue circonférentielle réglable (C) ;
- un dispositif de configuration (18) pour configurer radialement le support de formage (16) ;
- une unité de pose (15) pour poser l'élément en forme de bande continue (14) sur la surface de pose radialement externe (17) du support de formage (16) par superposition partielle d'une spire (S) sur la précédente selon un nombre entier (n) de spires (S) et un pas d'avance vrai (pₑ) des spires (S), de manière à former un produit semi-fini (11) ;
- des dispositifs (22) pour calculer le nombre entier (n) de spires (S), l'étendue circonférentielle (C) de la surface radialement externe (17), et le pas d'avance vrai (pₑ) des spires (S) ;
- une unité de commande (23) associée fonctionnellement aux dispositifs de calcul (22), pour régir le fonctionnement dudit dispositif (1) pour préparer ladite au moins une nappe de carcasse (3) ;
- une unité de coupe (20) pour couper le produit semi-fini (11) le long d'une ligne de coupe (T) s'étendant dans l'étendue longitudinale du support de formage (16).

19. Appareil selon la revendication 18, dans lequel le dispositif de calcul (22) opérant pour calculer le nombre de spires (n) a, comme données d'entrée, la longueur (L) de ladite au moins une nappe de carcasse (3), la largeur (w_{b}) de l'élément en forme de bande continue (14), l'angle de conception (β) de ladite au moins une nappe de carcasse (3) et une largeur d'une partie de chevauchement (s) d'une spire (S) sur une spire adjacente (S).

20. Appareil selon l'une des revendications 18 ou 19, dans lequel le dispositif de calcul (22) opérant pour calculer le pas d'avance vrai a, comme données d'entrée, la longueur (L) de ladite au moins une nappe de carcasse (3), la largeur (w_{b}) de l'élément en forme de bande continue (14), l'angle de conception (β) de ladite au moins une nappe de carcasse (3) et une largeur d'une partie de chevauchement (s) d'une spire (S) sur une spire adjacente (S).

21. Appareil selon l'une quelconque des revendications 18 à 20, dans lequel le dispositif de calcul (22) opérant pour calculer l'étendue circonférentielle (C) a, comme données d'entrée, la largeur (W) de ladite au moins une nappe de carcasse (3), la longueur (L) de ladite au moins une nappe de carcasse (3), la largeur (w_{b}) de l'élément en forme de bande continue (14), l'angle de conception (β) de ladite au moins une nappe de carcasse (3) et une largeur d'une partie de chevauchement (s) d'une spire (S) sur une spire adjacente (S).

22. Appareil selon l'une quelconque des revendications 18 à 21, dans lequel l'unité de pose (15) comprend des dispositifs pour mettre le support de formage (16) en rotation autour de l'axe longitudinal (X-X), une tête de pose (19) et des dispositifs (19a) pour déplacer la tête de pose (19) suivant une direction parallèle audit axe longitudinal (X-X).

23. Appareil selon l'une quelconque des revendications 19 à 21, dans lequel un entier sous-multiple de ladite longueur (L) correspond à ladite longueur (L) de ladite au moins une nappe de carcasse (3).

24. Appareil selon la revendication 21, dans lequel un entier multiple de ladite largeur (W) correspond à ladite longueur (L) de ladite au moins une nappe de carcasse (3).

25. Appareil selon les revendications 23 et 24, dans lequel lesdits entiers multiple et sous-mutiple ont la même valeur.
